# EUROPÄISCHE PATENTANMELDUNG

(11) **EP 0 834 244 A2**
(43) Veröffentlichungstag der Anmeldung: **08.04.1998**
(21) Anmeldenummer: 97114510.7
(22) Anmeldetag: 22.08.1997
(51) Int. Cl.: A01B 59/00

(54) **Unterlenkeranschluss für landwirtschaftliche Geräte**

(30) Priorität: 04.09.1996 DE 29615285 U
(71) Anmelder: H. Niemeyer Söhne GmbH & Co. KG, 48477 Hörstel-Riesenbeck (DE)
(72) Erfinder: Laumann, Bernhard, 48477 Hörstel (DE)

(57) **Zusammenfassung**

Die Erfindung betrifft einen Unterlenkeranschluß für landwirtschaftliche Geräte für die Verbindung am Dreipunktgestänge von Traktoren (4) bestehend aus Unterlenkerzapfen (2) mit Bund (8) und einer Verbindung dieser Unterlenkerzapfen (2) zum landwirtschaftlichen Gerät, wobei im Bereich des Übergangsradiusses (12) zwischen Unterlenkerzapfen (2) und Bund (8) eine Bundbuchse (9) angeordnet ist.

## Beschreibung

Die Erfindung betrifft einen Unterlenkeranschluß für landwirtschaftliche Geräte gemäß dem Oberbegriff des Anspruchs 1.

Landwirtschaftliche Geräte zum Ausheben in Transportstellung werden überwiegend über ein genormtes Dreipunktgestänge mit dem Traktor verbunden. Aufgesattelte Geräte benutzen lediglich die unteren Kopplungspunkte des Dreipunktgestänges. Das traktorseitige Dreipunktgestänge besteht aus zwei Unterlenkern mit gelenkigen Anschlüssen zum Gerät, die als Kugelgelenke oder Schnellkuppler-Fanghaken ausgebildet sein können und einem längenveränderlichen Oberlenker.

Die in den Anschlußmaßen genormten Unterlenkerzapfen übertragen bei der Arbeit des Gerätes neben den Zugkräften, insbesondere bei Kurvenfahrten, auch erhebliche axiale Kräfte in die Unterlenker des Traktors. Diese Kräfte werden über einen Bund am Unterlenkerzapfen abgestützt. Der Übergang vom Durchmesser des Unterlenkerzapfens zum Bund muß dabei klein gehalten werden, um eine sichere Anlage der Kugel oder des Adapterstückes des Schnellkupplers zu gewährleisten. Nachteilig ist der Kraftfluß durch die Einschnürung im Übergangsbereich zum Bund und die damit verbundene Gefahr eines Dauerbruchs, insbesondere bei großen Stoßbelastungen in der Transportfahrt mit schweren Anbaugeräten. Wird dieser Übergangsradius zwischen Unterlenkerzapfen und Bund lediglich vergrößert, bewirkt dies ein Beschädigen im Bereich des Radiusses durch die traktorseitigen Anschlußteile, was zur Kerbwirkung führen kann und die Gefahr des Dauerbruchs vergrößert.

Aufgabe der Erfindung ist es, einen Unterlenkeranschluß für landwirtschaftliche Geräte zu schaffen, der mit einfachen Mitteln diese Nachteile vermeidet und die Lebensdauer des geräteseitigen Unterlenkers erhöht.

Die Erfindung löst diese Aufgabe mit dem kennzeichnenden Merkmal des Anspruchs 1. Hinsichtlich weiterer wesentlicher Ausgestaltungen der Erfindung wird auf die Ansprüche 2 bis 11 verwiesen.

Die Erfindung sieht in vorteilhafter Weise vor, daß im Bereich des Überganges zwischen Unterlenkerzapfen und Bund eine Bundbuchse angeordnet ist, deren Ausbildung einen großen Übergangsradius zuläßt, damit die Festigkeit und Lebensdauer dieser sicherheitstechnisch relevanten Verbindungsteile wesentlich erhöht. Die Bundbuchse kann beispielsweise beweglich, jedoch unverlierbar mit dem Unterlenkeranschluß verbindbar sein, wobei sie in ihrer Gebrauchslage beweglich auf dem Bund geführt ist. Hierdurch kann sich die Bundbuchse bei der Arbeit eventuellen Fertigungsungenauigkeiten optimal anpassen.

Um die Unverlierbarkeit der Bundbuchse zu gewährleisten, sieht die Erfindung vor, daß die Bundbuchse im Endbereich jenseits der Führung auf dem Bund durch einen Noppen o.ä. eine eng begrenzte Verdickung aufweist. Der Innendurchmesser dieses Noppens ist so ausgelegt, daß er dem Federungsverhalten der Bundbuchse entspricht, wenn diese axial über den Bund geschoben wird und der Noppen auf der Rückseite des Bundes in seiner Ausgangsstellung zurückfedert und damit die Bundbuchse unverlierbar macht.

Der Übergang zwischen Unterlenkerzapfen und Bund wird mit einem möglichst großen Radius versehen, um den Kraftfluß vorteilhaft zu gestalten. Die Erfindung sieht vor, je nach Normdurchmesser des Unterlenkerzapfens einen Radius von 4 mm bis 10 mm, vorzugsweise 7 mm, vorzusehen. Das Innenteil der Bundbuchse ist auf dieses Maß abgestimmt, und zwar so, daß die bei der Arbeit des Gerätes auftretenden Axialkräfte über die Bundbuchse möglichst im äußeren Drittel des Durchmessers zwischen Unterlenkerzapfendurchmesser und Bunddurchmesser abgestützt, d.h. möglichst im äußeren Bereich auf dem großen Umfang des Bundes eingeleitet werden. Hierzu geht der Übergangsradius der Bundbuchse in eine Fase von 15° bis 45°, vorzugsweise 30°, zur Horizontalen über, um dieses sicherzustellen.

Als weitere Möglichkeit der Sicherung der Bundbuchse sieht die Erfindung vor, diese durch einen Preßsitz auf dem Bund zu führen und gleichzeitig zu sichern. Die Bundbuchse wird hierdurch kürzer und preisgünstiger.

Weitere Merkmale und Vorteile der Erfindung ergeben sich aus der nachfolgenden Beschreibung und den Zeichnungen, in denen zwei Ausführungsbeispiele eines Unterlenkeranschlusses für landwirtschaftliche Geräte nach der Erfindung schematisch, angenähert maßstäblich dargestellt sind.

Es zeigt:
- Fig. 1: - Eine Unterlenkerwelle.
- Fig. 2: - Einen Unterlenkerzapfen mit Flanschanschluß zum Gerät.
- Fig. 3: - Die Detailansicht eines Unterlenkerzapfens mit Bundbuchse in einer Schnittdarstellung.
- Fig. 4: - Ein Anwendungsbeispiel eines Unterlenkeranschlußes an einem Drehpflug in einer Ansicht entgegen der Fahrtrichtung.
- Fig. 5: - Die schematische Darstellung des Drehpfluges gemäß Fig. 4 in einer Draufsicht.

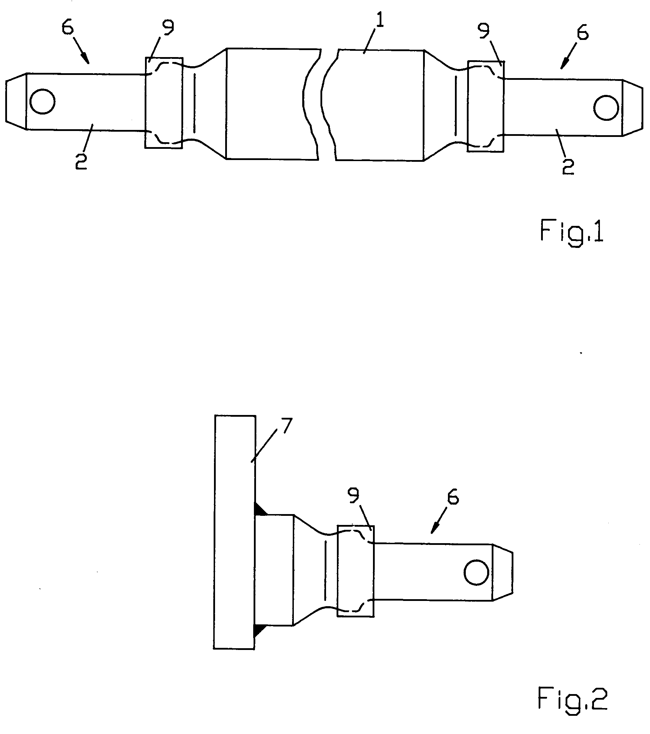

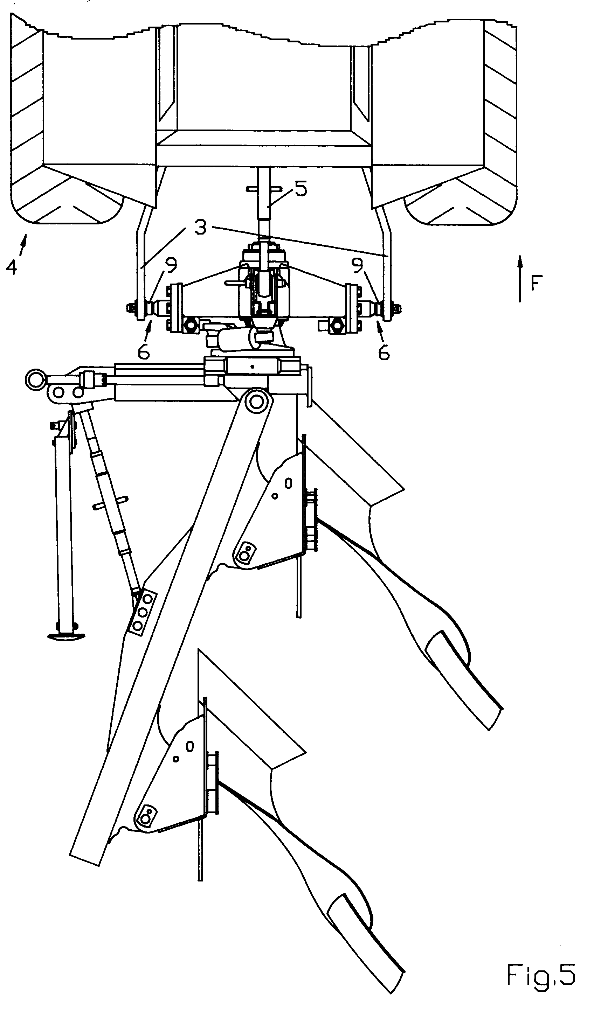

In Fig. 1 ist als Ausführungsbeispiel für einen geräteseitigen Unterlenkeranschluß (6) eine Unterlenkerwelle (1) dargestellt. An beiden Enden der Unterlenkerwelle (1) sind Unterlenkerzapfen (2), auf die die beiden kugelförmigen Gelenke der traktorseitigen Unterlenker (3) aufgeschoben werden und zusammen mit einem Oberlenker (5) die Verbindung zum Traktor (4) herstellen (Fig. 5). Die Unterlenkerwelle (1) wird entweder in das Gerät integriert oder sie bleibt in den traktorseitigen Unterlenkern (3) montiert und bildet einen Teil einer Schnellkupplung für das Kuppeln des Gerätes.

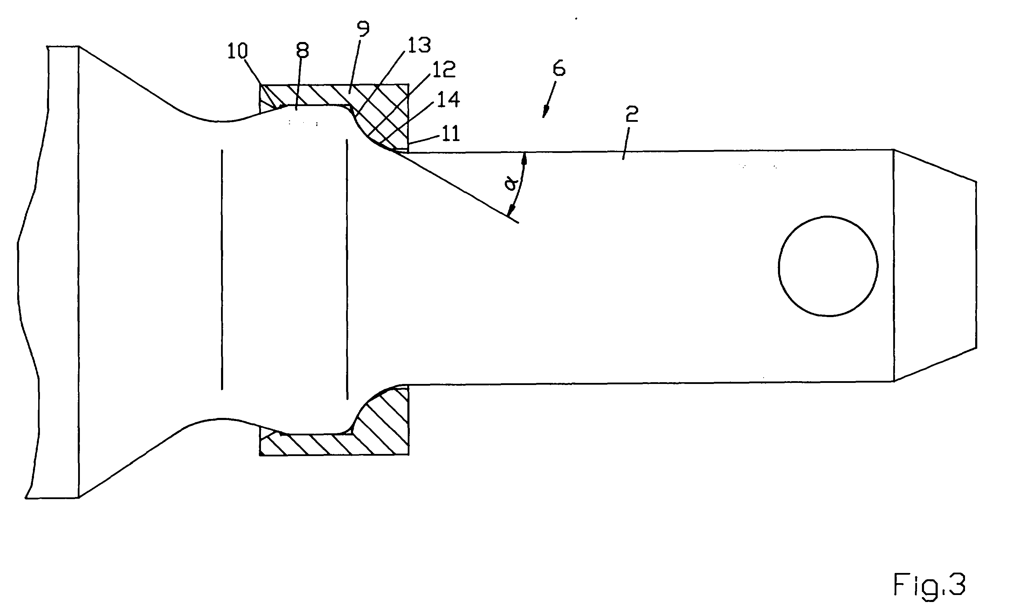

Fig. 2 stellt ein weiteres Anwendungsbeispiel für einen geräteseitigen Unterlenkeranschluß (6) dar. Der Unterlenkeranschluß (6) ist mit einem Flansch (7) fest verbunden, der fest oder lösbar jeweils außen im vorderen Bereich des Gerätes angebracht ist.

Fig. 3 zeigt das Detail Unterlenkeranschluß (6) in vergrößerter Darstellung. Der in seinen Abmessungen genormte Unterlenkerzapfen (2) geht in einen Bund (8) über. Eine Bundbuchse (9) übergreift den Bund (8), auf dem sie beweglich geführt ist. Im zur Gerätemitte hin gerichteten Endbereich der Bundbuchse (9) sieht die Erfindung am Innendurchmesser der Bundbuchse (9) eine Verdickung, beispielsweise in Form eines Noppens (10), vor. Dieser Noppen bildet die axiale Sicherung der Bundbuchse (9). Während der Montage der Bundbuchse (9) gleitet der Noppen (10) auf dem Außendurchmesser des Bundes (8) bis er jenseits des Bundes (8) durch Federung seinen Durchmesser verringert und damit die axiale Sicherung übernimmt.

Das zapfenseitige Ende der Bundbuchse (9) bildet eine etwa vertikal ausgerichtete Stirnfläche (11), an dem die Kupplungsteile der traktorseitigen Unterlenker (3) anliegen und die axialen Kräfte einleiten. Diese stützen sich im oberen Drittel des Bunddurchmessers über einen Übergangsradius (13) ab. Der Übergangsradius (13) läuft tangential aus in eine Fase (14), die zur Horizontalen einen Winkel (α) bildet und damit die Abstützung der Axialkräfte im äußeren Drittel des Bunddurchmessers sicherstellt. Die Fase (14) bildet zur Horizontalen einen Winkel (α) von etwa 30°.

Der Übergangsradius (12) zwischen den Unterlenkerzapfen (2) und dem Bund (8) soll möglichst groß sein und ist bei diesem Ausführungsbeispiel 7 mm, um einen günstigen Kraftfluß zu bewirken.

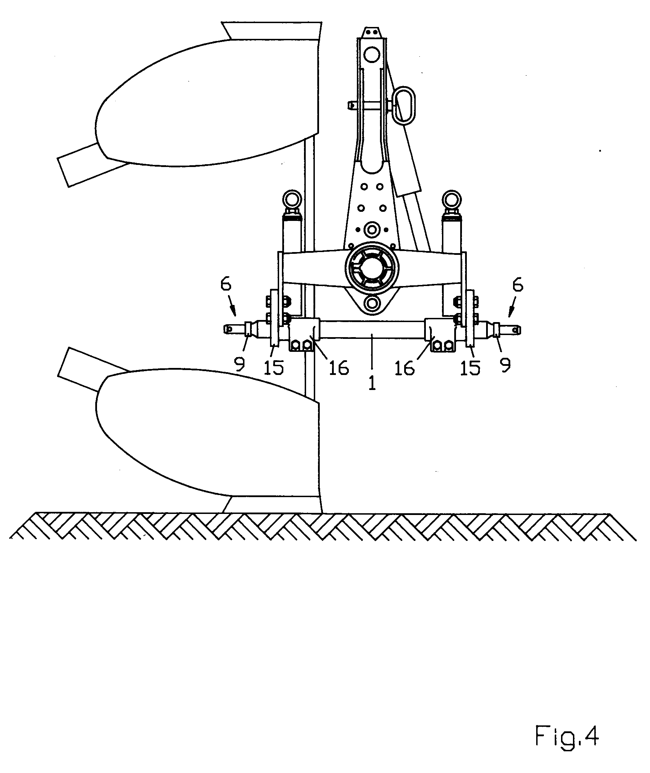

Als Ausführungsbeispiel in Anwendung einer geräteseitigen Unterlenkerwelle (1) ist in Fig. 4 vereinfacht das Vorderteil eines Drehpfluges, entgegen der Fahrtrichtung gesehen, dargestellt. Die Unterlenkerwelle (1) ist in Laschen (15) geführt und durch Klemmstücke (16) axial gesichert.

Fig. 5 zeigt eine Draufsicht des Drehpfluges nach Fig. 4 und die Verbindung des Pfluges zum Traktor (4), der sich bei der Arbeit des Gerätes in Fahrtrichtung (F) bewegt. Die Verbindung zum Gerät wird über das traktorseitige Dreipunktgestänge, bestehend aus den beiden Unterlenkern (3) und dem Oberlenker (5) hergestellt. Die beiden Bundbuchsen (9) übertragen in vorteilhafter Weise die Axialkräfte in die Unterlenker (3) des Traktors (4).

Nach der Erfindung ist es nach einem nicht dargestellten Ausführungsbeispiel auch möglich, die Bundbuchsen (9) so auszubilden, daß sie auf dem Bund (8) durch einen Preßsitz geführt und axial gesichert sind. Hierdurch kann die Bundbuchse in vorteilhafter Weise kürzer werden, da bei dieser Ausführung auf den Noppen (10) verzichtet werden kann.

Die Vorteile der Erfindung können bei allen Geräten angewendet, die durch Unterlenker (3) in Verbindung mit dem Traktor (4) gekoppelt werden können.

## Patentansprüche

1. Unterlenkeranschluß für landwirtschaftliche Geräte für die Verbindung am Dreipunktgestänge von Traktoren (4) bestehend aus Unterlenkerzapfen (2) mit Bund (8) und einer Verbindung dieser Unterlenkerzapfen (2) zum landwirtschaftlichen Gerät, dadurch gekennzeichnet, daß im Bereich des Übergangsradiusses (12) zwischen Unterlenkerzapfen (2) und Bund (8) eine Bundbuchse (9) angeordnet ist.

2. Unterlenkeranschluß nach Anspruch 1, dadurch gekennzeichnet, daß die Bundbuchse (9) beweglich jedoch unverlierbar mit dem Unterlenkeranschluß (6) verbindbar ist.

3. Unterlenkeranschluß nach Anspruch 2, dadurch gekennzeichnet, daß die Bundbuchse (9) beweglich auf dem Bund (8) geführt ist.

4. Unterlenkeranschluß nach einem der Ansprüche 2 oder 3, dadurch gekennzeichnet, daß die Bundbuchse (9) den Bund (8) des Unterlenkerzapfens (2) übergreift und axial gesichert ist.

5. Unterlenkeranschluß nach Anspruch 4, dadurch gekennzeichnet, daß die Bundbuchse (9) im Endbereich jenseits des Bundes (8) durch einen Noppen (10) im Bereich des geführten Innendurchmessers der Bundbuchse (9) axial sicherbar ist.

6. Unterlenkeranschluß nach einem der Ansprüche 2 bis 5, dadurch gekennzeichnet, daß der Übergangsradius (13) der Bundbuchse (9) im Bereich des Übergangsradiusses (12) des Unterlenkerzapfens (2) zum Bund (8) gleich oder kleiner ist als der Übergangsradius (12) zwischen Unterlenkerzapfen (2) und Bund (9).

7. Unterlenkeranschluß nach Anspruch 6, dadurch gekennzeichnet, daß der Übergangsradius (12) zwischen Unterlenkerzapfen (2) und Bund (8) 4 mm bis 10 mm, vorzugsweise 7 mm, beträgt.

8. Unterlenkeranschluß nach einem der Ansprüche 2 bis 7, dadurch gekennzeichnet, daß sich die Bundbuchse (9) im oberen Drittel des Bundes (8) axial abstützt.

9. Unterlenkeranschluß nach einem der Ansprüche 2 bis 8, dadurch gekennzeichnet, daß der Übergangsradius (13) der Bundbuchse (9) in einer Fase (14) mit einem Winkel (α) zur Horizontalen tangential ausläuft.

10. Unterlenkeranschluß nach Anspruch 9, dadurch gekennzeichnet, daß der Winkel (α) 15° bis 45°, vorzugsweise 30°, beträgt.

11. Unterlenkeranschluß nach Anspruch 1, dadurch gekennzeichnet, daß die Bundbuchse (9) auf dem Bund (8) durch Preßsitz geführt und gesichert ist.
